# EUROPEAN PATENT APPLICATION

(11) **EP 4 668 848 A1**
(43) Date of publication of application: **24.12.2025**
(21) Application number: 24757122.7
(22) Date of filing: 07.02.2024
(51) Int. Cl.: H04W 28/18, H04W 74/08, H04W 52/02, H04W 84/12, H04W 88/08

(54) **METHOD AND DEVICE FOR PERFORMING RELAY TRANSMISSION IN SPECIFIC PERIOD IN WIRELESS LAN SYSTEM**

(30) Priority: 13.02.2023 KR 20230018938
(71) Applicant: LG Electronics Inc., Yeongdeungpo-gu Seoul 07336 (KR)
(72) Inventor: LIM, Dongguk, Seoul 06772 (KR); CHUN, Jinyoung, Seoul 06772 (KR); CHOI, Jinsoo, Seoul 06772 (KR); PARK, Eunsung, Seoul 06772 (KR); JANG, Insun, Seoul 06772 (KR)
(74) Representative: Plasseraud IP
(86) International application number: PCT/KR2024/001845
(87) International publication number: WO 2024/172393

(57) **Abstract**

A method and a device for performing a relay operation by using a specific period in a wireless LAN system are disclosed. A method performed by means of a first station (STA) in a wireless LAN system, according to one embodiment of the present disclosure, comprises the steps of: receiving, from an access point (AP), a first frame including a relay operation element; receiving from the AP, a TWT element including a broadcast target wake time (TWT) parameter set field; and performing a relay operation in a specific service period (SP) on the basis of the relay operation element and the TWT element, wherein the broadcast TWT parameter set can include a broadcast TWT parameter recommendation field indicating that the specific SP is for the relay operation.

## Description

### [TECHNICAL FIELD]

The present disclosure relates to a communication operation in a wireless local area network (WLAN) system, and more specifically, to a method and device for performing relay transmission within a specific allocated period in a next-generation wireless LAN system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device for performing relay transmission in a specific section in a wireless LAN system.

The technical problem of the present disclosure is to provide a method and device for setting/indicating a service period (SP) for relay transmission.

The technical objects to be achieved by the present disclosure are not limited to the above-described technical objects, and other technical objects which are not described herein will be clearly understood by those skilled in the pertinent art from the following description.

### [Technical Solution]

According to one embodiment of the present disclosure, a method performed by a first station (STA) in a wireless LAN system may include receiving a first frame including a relay operation element from an access point (AP); receiving a broadcast target wake type (TWT) element including a TWT parameter set field from the AP; and performing a relay operation within a specific service period (SP) based on the relay operation element and the TWT element, and the broadcast TWT parameter set may include a broadcast TWT parameter recommendation field indicating that the specific SP is for the relay operation.

According to another embodiment of the present disclosure, a method performed by an access point (AP) in a wireless LAN system may include transmitting a first frame including a relay operation element to a first station (STA); transmitting a broadcast target wake type (TWT) element including a TWT parameter set field to the first STA; and performing a relay operation within a specific service period (SP) based on the relay operation element and the TWT element, and the broadcast TWT parameter set may include a broadcast TWT parameter recommendation field indicating that the specific SP is for the relay operation.

### [Technical Effects]

According to various embodiments of the present disclosure, a method and device for performing relay transmission in a specific period in a wireless LAN system can be provided.

According to various embodiments of the present disclosure, a method and device for setting/indicating an SP for relay transmission are provided.

According to various embodiments of the present disclosure, the influence of range and obstacles can be reduced through a relay transmission procedure, and the reception SNR of an STA can be improved, thereby reducing delay and improving throughput for signal transmission.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram illustrating an example of an individual TWT operation to which the present disclosure may be applied.
FIG. 9 is a diagram illustrating an example of a broadcast TWT operation to which the present disclosure may be applied.
FIG. 10 is a diagram illustrating an example of a TWT information element format.
FIG. 11 is a diagram illustrating examples of an individual TWT parameter set field format.
FIG. 12 is a diagram illustrating examples of a broadcast TWT parameter set field format.
FIG. 13 is a flowchart illustrating a method performed by a first STA according to an embodiment of the present disclosure.
FIG. 14 is a flowchart illustrating a method performed by an AP according to an embodiment of the present disclosure.
FIG. 15 illustrates a configuration of a relay operation element according to an embodiment of the present disclosure.
FIG. 16 illustrates the configuration of a control field of a TWT element according to one embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11 The Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

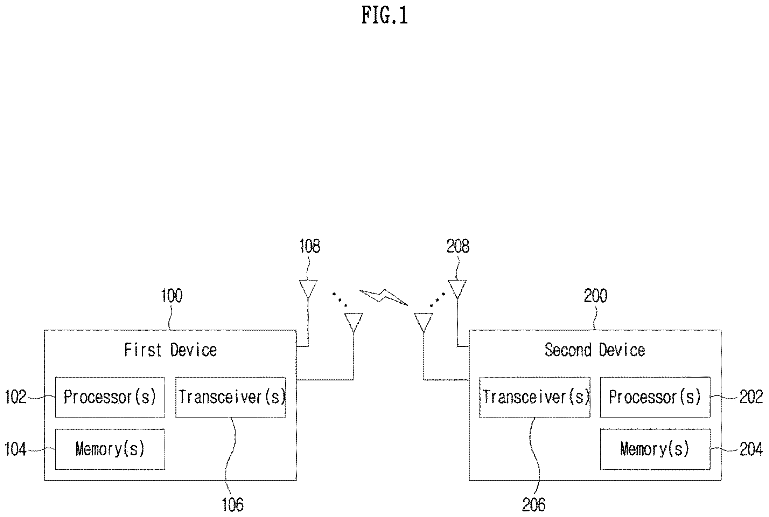

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

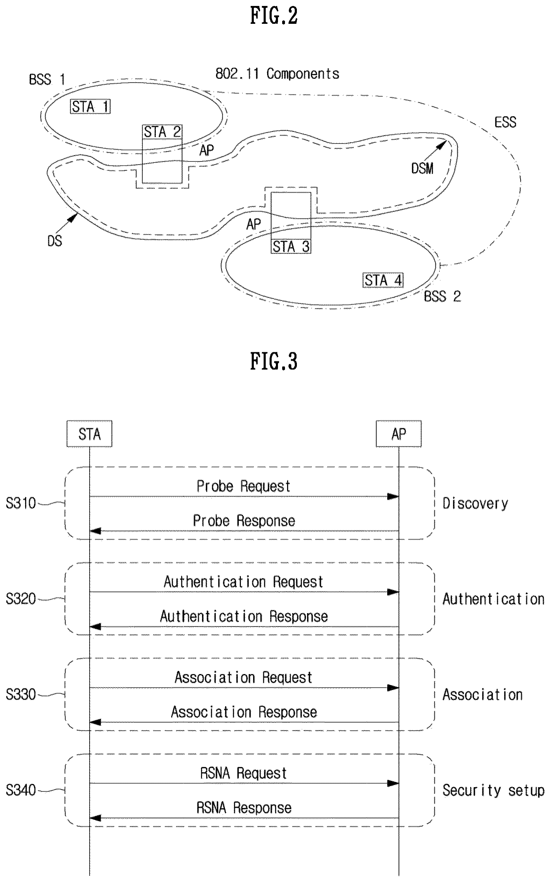

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

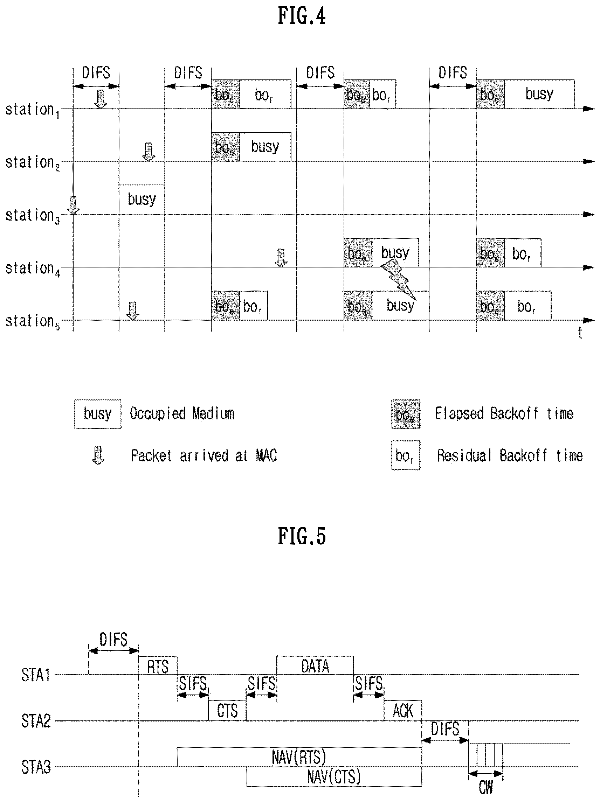

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

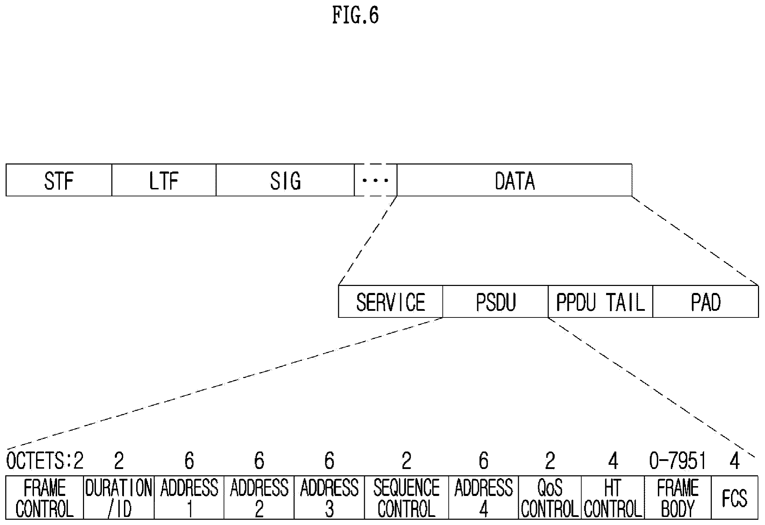

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

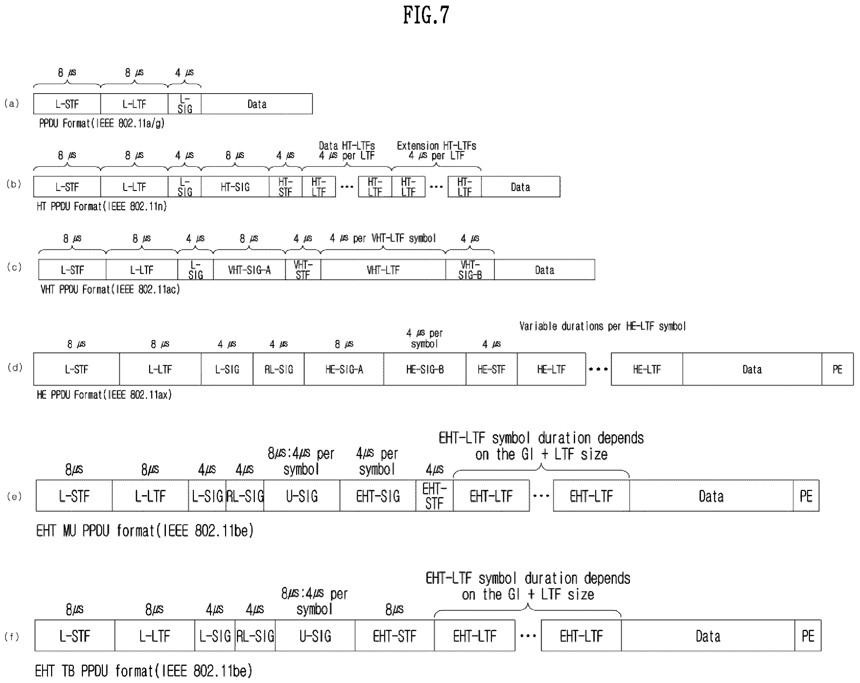

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Target wake time (TWT)

TWT is a PS (Power Saving) technology that can improve the energy efficiency of non-AP STAs by defining the service period (SP) between AP and non-AP STAs and sharing information about SPs to reduce medium contention.

An STA that performs a request/suggest/demand, etc. in the TWT setup phase may be referred to as a TWT requesting STA. Additionally, the AP that responds, such as Accept/Reject, to the request may be referred to as a TWT responding STA. The setup step may include the process of determining/defining the STA's TWT request to the AP, the type of TWT operation performed, and the type of frame to be transmitted and received. TWT operation can be divided into individual TWT and broadcast TWT.

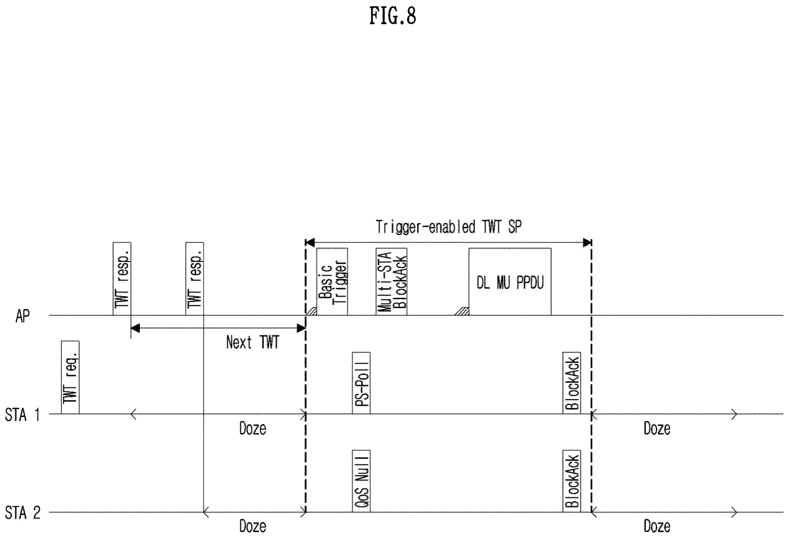

FIG. 8 is a diagram for describing an example of an individual TWT operation to which the present disclosure may be applied.

Individual TWT is a mechanism in which an AP and a non-AP STA negotiate the awake/doze state of the non-AP STA through transmission and reception of TWT request/response frames, and then exchange data.

In the example of FIG. 8, AP and STA 1 may form a trigger-enabled TWT agreement through a TWT request frame and a TWT response frame.

Here, the method used by STA 1 is a solicited TWT method. When STA 1 transmits a TWT request frame to the AP, STA 1 receives information for TWT operation from the AP through a TWT response frame.

On the other hand, STA 2, which performs the unsolicited TWT method, may receive information about trigger-enabled TWT agreement configurations from the AP through an unsolicited TWT response.

Specifically, STA 2 may calculate the next TWT by adding a specific number from the current TWT value. During a trigger-enabled TWT SP, the AP may transmit a trigger frame to STAs. The trigger frame may inform STAs that the AP has buffered data. In response to this, STA 1 may inform the AP of its awake state by transmitting a PS-Poll frame. Additionally, STA 2 may notify the AP of its awake state by transmitting a QoS Null frame. Here, the data frames transmitted by STA 1 and STA 2 may be frames in TB PPDU format. The AP that has confirmed the state of STA 1 and STA 2 may transmit a DL MU PPDU to the awake STAs. When the corresponding TWT SP expires, STA 1 and STA 2 may switch to the doze state.

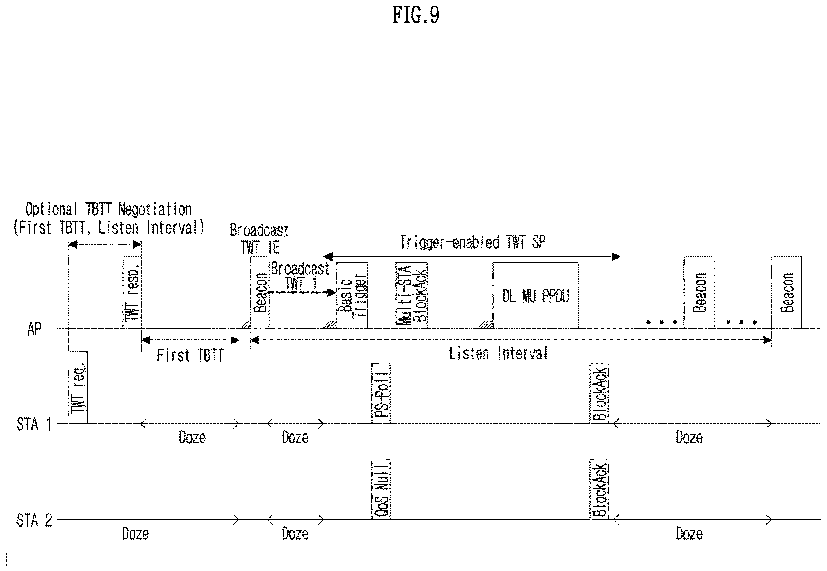

FIG. 9 is a diagram for describing an example of a broadcast TWT operation to which the present disclosure may be applied.

Broadcast TWT is a type of TWT in which a non-AP STA (or TWT scheduling STA) acquires information about target beacon transmission time (TBTT) and listening interval by transmitting and receiving TWT request/response frames with the AP (or TWT scheduled STA). Here, a negotiation operation for TBTT may be performed. Based on this, the AP may define a frame that will contain TWT scheduling information through a beacon frame.

In FIG. 9, STA 1 performs a solicited TWT operation, and STA 2 performs an unsolicited TWT operation. The AP may transmit the DL MU PPDU after checking the awake state of the STAs through the trigger transmitted by the AP. This may be the same as the process for individual TWT. In broadcast TWT, the trigger-enabled TWT SP, including the beacon frame, may be repeated several times at regular intervals.

Transmission of TWT information may be accomplished through a TWT information frame and a TWT information element. The TWT information frame is transmitted by an STA to request or convey information about the TWT agreement, and is transmitted by one of the STAs in the existing TWT agreement. The action field of the TWT Information frame includes a TWT information field. The TWT Information field may include a 3-bit TWT flow identifier subfield, a 1-bit response requested subfield, a 1-bit next TWT request subfield, a 2-bit next TWT subfield size subfield, 1-bit all TWT subfield, and 0/32/48/64-bit next TWT subfield.

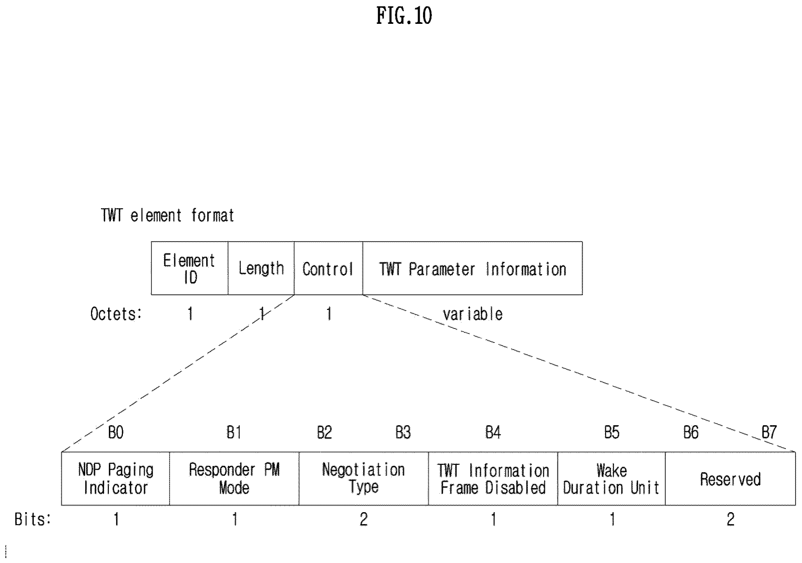

FIG. 10 is a diagram for describing an example of the TWT information element format.

TWT elements may be transmitted and received by being included in beacons, probe responses, (re)combined response frames, etc. The TWT element may include an element ID field, a length field, a control field, and a TWT parameter information field.

The control field of the TWT element has the same format regardless of individual TWT and broadcast TWT.

The NDP paging indication subfield may have a value of 1 if the NDP paging field exists, and may have a value of 0 if the NDP paging field does not exist.

The responder PM mode subfield may indicate a power management (PM) mode.

The negotiation type subfield may indicate whether the information included in the TWT element is about negotiation of parameters of broadcast TWT or individual TWT(s), or about wake TBTT interval.

For example, if the value of the negotiation type subfield is 0, the TWT subfield is for the future individual TWT SP start time, and the TWT element contains one individual TWT parameter set. This may correspond to individual TWT negotiation between the TWT requesting STA and the TWT responding STA, or to individual TWT announcement by the TWT responder.

For example, if the value of the negotiation type subfield is 1, the TWT subfield is for the next TBTT time, and the TWT element contains one individual TWT parameter set. This may correspond to wake TBTT and wake interval negotiation between a TWT scheduled STA and a TWT scheduled AP.

For example, if the value of the negotiation type subfield is 2, the TWT subfield is for the future broadcast TWT SP start time, and the TWT element includes one or more broadcast TWT parameter sets. This may correspond to providing a broadcast TWT schedule to the TWT scheduled STA by including a TWT element in the broadcast management frame transmitted by the TWT scheduling AP.

For example, if the value of the negotiation type subfield is 3, the TWT subfield is for the future broadcast TWT SP start time, and the TWT element includes one or more broadcast TWT parameter sets. This may correspond to managing membership in the broadcast TWT schedule by including a TWT element in an individually addressed management frame transmitted by either a TWT-scheduled STA or a TWT-scheduled AP.

If the TWT information frame disabled subfield is set to 1, it indicates that reception of the TWT information frame by the STA is disabled; otherwise, it may be set to 0.

The wake duration unit subfield indicates the unit of the nominal minimum TWT wake duration field. The wake duration unit subfield may be set to 0 when the unit is 256us, and may be set to 1 when the unit is TU. If it is not a HE/EHT STA, the wake duration unit subfield may be set to 0.

The most significant bit (MSB) of the negotiation type field may correspond to the broadcast field. If the broadcast field is 1, one or more broadcast TWT parameter sets may be included in the TWT element. If the broadcast field is 0, only one individual TWT parameter set can be included in the TWT element. A TWT element with the broadcast field set to 1 may be referred to as a broadcast TWT element.

Also, FIG. 10 shows a case where the reserved field consists of 2 bits, but this is only an example. For example, the TWT element may include a Link ID bitmap present field (e.g., 1 bit) and a reserved field (e.g., 1 bit).

For example, if the link ID bitmap presence field is set to 1, the link ID bitmap subfield is set to exist in the individual TWT parameter set field format to be described later, and if the link ID bitmap presence field is set to 0, the link ID bitmap subfield may be set not to exist in the individual TWT parameter set field format.

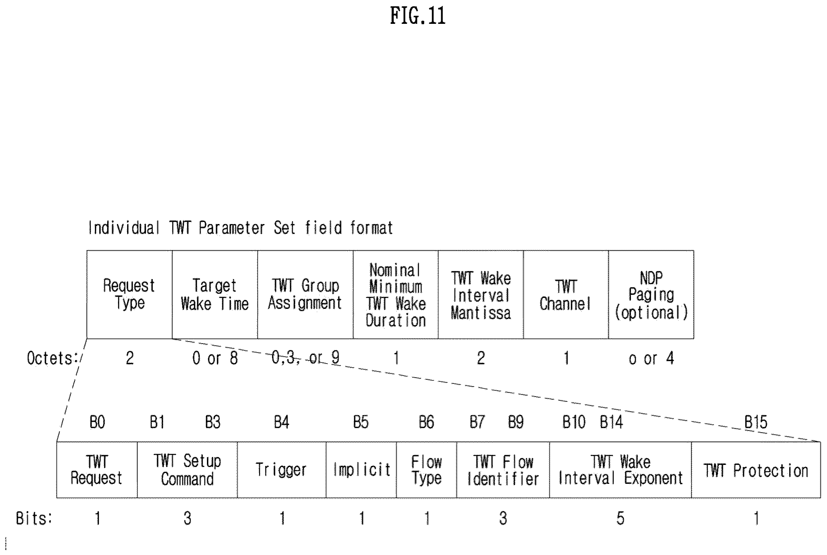

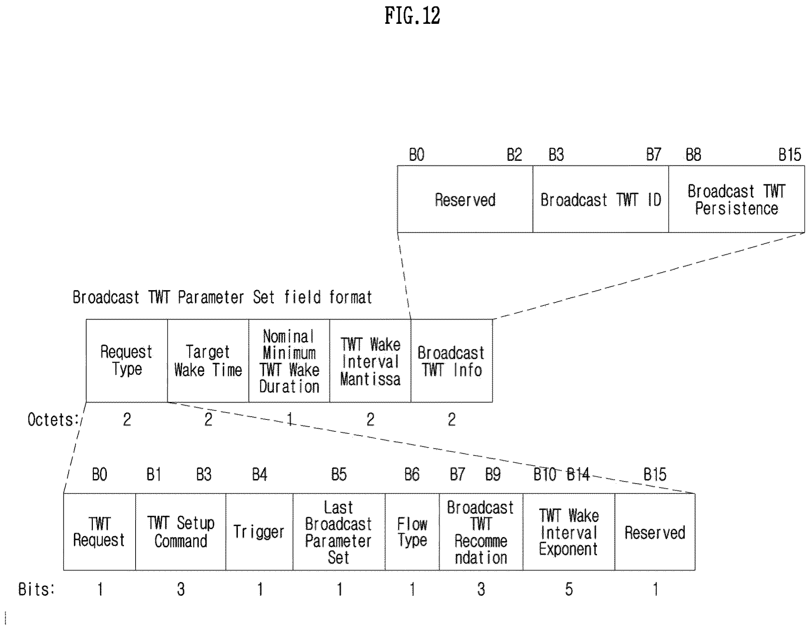

FIG. 11 is a diagram for describing examples of individual TWT parameter set field formats. FIG. 12 is a diagram for describing examples of the broadcast TWT parameter set field format.

The TWT parameter information field included in the TWT element of FIG. 10 may have a different configuration depending on individual TWT or broadcast TWT.

In the case of an individual TWT, the TWT parameter information field within the TWT element includes a single individual TWT parameter set field.

In the case of broadcast TWT, the TWT parameter information field in the TWT element includes one or more broadcast TWT parameter set fields. Each broadcast TWT parameter set may include specific information about one broadcast TWT.

As shown in FIGS. 11 and 12, the individual TWT parameter set field and the broadcast TWT parameter set field include common subfields.

The request type subfield has the same size in the individual TWT parameter set field and the broadcast TWT parameter set field, but the detailed configuration may be configured differently. This will be described later.

The target wake time subfield indicates the start time of the individual/broadcast TWT SP scheduled in the future.

The nominal maximum TWT wake duration subfield indicates the minimum unit that the TWT requesting STA is expected to wake up to complete the frame exchange associated with the TWT flow identifier during the TWT wake interval duration. Here, the TWT wake interval may mean the average time between consecutive TWT SPs expected by the TWT requesting STA.

The TWT Wake Interval Mantissa subfield is the binary value of the TWT wake interval value, which can be expressed in microseconds.

Referring to FIG. 11, the TWT group assignment subfield, TWT channel, and NDP paging subfield are included only in the individual TWT parameter set field.

The TWT group allocation subfield includes information about the TWT group to which the STA is assigned and provides it to the TWT requesting STA. The TWT value within the TWT group may be calculated using the corresponding information. The TWT value of the STA may be equal to the value of the zero offset and the value of the TWT unit multiplied by the value of the TWT offset.

The TWT channel subfield represents a bitmap indicating allowed channels. When transmitted by a TWT requesting STA, the TWT channel subfield may include a bitmap indicating the channel that the STA requests to use as a temporary basic channel during the TWT SP. When transmitted by the TWT response STA, the TWT channel subfield may include a bitmap indicating the channel on which the TWT request is allowed.

The NDP paging subfield is optional and may include the identifier of the STA being paged, information related to the maximum number of TWT wake intervals between NDP paging frames, etc.

Referring to FIG. 12, the broadcast TWT information (broadcast TWT info) subfield is included only in the broadcast TWT parameter set field. The broadcast TWT information subfield may include a 3-bit reservation bit, a 5-bit broadcast TWT identifier (ID) subfield, and an 8-bit broadcast TWT persistence subfield. The broadcast TWT identifier subfield indicates the broadcast ID of a specific broadcast TWT in which the STA requests participation or provides TWT parameters, depending on the value of the TWT setup command subfield of the TWT element. The broadcast TWT persistence subfield indicates the number of TBTTs planned on the schedule of the broadcast TWT.

Next, the detailed configuration of the request type subfield will be described.

First, referring to FIG. 11, the format of the request type subfield of the individual TWT parameter set field will be described.

The TWT request subfield may indicate whether it is a requesting STA or a responding STA. If the value is 1, it may indicate that it is a TWT requesting STA or a scheduling STA, and if the value is 0, it may indicate that it is a TWT responding STA or a scheduling AP.

The TWT setup command subfield may indicate commands such as Request, Suggest, Demand, Accept, Alternate, Dictate, Reject.

The trigger subfield indicates whether to use a trigger frame in TWT SP. If the value is 1, the trigger may be used, and if the value is 0, the trigger may not be used.

The implicit subfield may indicate whether it is an implicit TWT or an explicit TWT. If the value is 1, it may indicate implicit TWT, and if it is 0, it may indicate explicit TWT.

The flow type subfield may indicate the interaction type between the TWT requesting STA (or TWT scheduling STA) and the TWT responding STA (or TWT scheduling AP). If the value is 1, it may mean an announced TWT in which the STA sends a wakeup signal to the AP by transmitting a PS-Poll or APSD (automatic power save delivery) trigger frame before a frame other than a trigger frame is transmitted from the AP to the STA. If the value is 0, it may mean an unannounced TWT.

The TWT flow identifier subfield may include a 3-bit value that uniquely identifies specific information for the TWT request in other requests made between the same TWT request STA and TWT response STA pair.

The TWT wake interval exponent subfield may set the TWT wake interval value in binary microsecond units. In the case of individual TWT, this may mean the gap between individual TWT SPs. The TWT wake interval of the requesting STA may be defined as [TWT Wake Interval Mantissa * 2 * TWT Wake Interval Exponent].

The TWT protection subfield may indicate whether to use the TWT protection mechanism. If the value is 1, TXOP in the TWT SP may be initiated with a NAV protection mechanism such as (MU)RTS/CTS or CTS-to-self frame, and if the value is 0, the NAV protection mechanism may not be applied.

Referring to FIG. 12, some of the subfields of the request type subfield of the broadcast TWT parameter set field are common with the subfields of the request type subfield of the individual TWT parameter set field, so description thereof is omitted. Subfields included only in the broadcast TWT parameter set are described below.

The Last Broadcast Parameter Set subfield indicates whether it is the last broadcast TWT parameter set. If the value is 1, it may indicate that it is the last broadcast TWT parameter set, and if the value is 0, it may indicate that the next broadcast TWT parameter set exists.

The broadcast TWT recommendation subfield may indicate recommendations for the frame type transmitted by the AP during the broadcast TWT SP with a value of 1-7.

The last 1 bit of the request type subfield of the broadcast TWT parameter set field may be reserved.

### Relay transmission procedure

In the next generation wireless LAN system, ultra-high reliability (UHR) can be supported when transmitting signals to STAs. In order to support UHR, various technologies for high throughput, low delay, and extended range delay can be applied.

The present disclosure can expand wireless LAN coverage/range for reliable transmission of various IoT devices as well as outdoors, and for expanding wireless LAN coverage/range, an AP can receive signals transmitted from STAs through a relay transmission procedure.

Hereinafter, a method of allocating and instructing/setting an SP (service period) for performing a relay operation in order to transmit and receive signals to one or more non-AP STAs (i.e., to perform a relay operation) using a relay STA will be described.

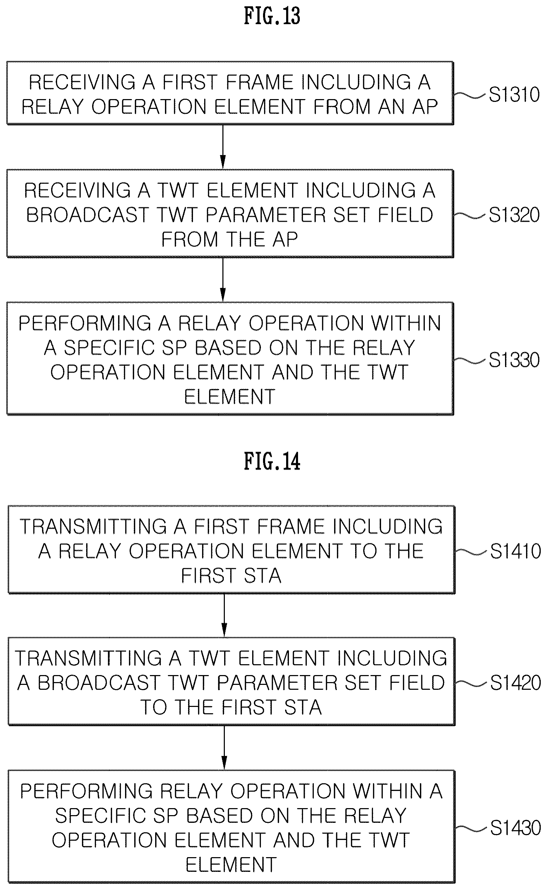

FIG. 13 is a flowchart illustrating a method performed by a first STA according to an embodiment of the present disclosure. In FIGS. 13 and 14 , the first STA may be a non-AP STA. For example, the first STA may be a non-AP STA operating as a relay STA, but is not limited thereto. In addition, at least one second STA may refer to a non-AP STA.

The first STA may receive a first frame including a relay operation element from an access point (AP) (S1310).

Here, the first frame may include at least one of a (re)association response frame, a probe response frame, and a (re)authentication response frame. Additionally or alternatively, the first STA may transmit to the AP at least one of a (re)association request frame, a probe request frame, and a (re)authentication request frame, which include a relay operation element.

The first STA may decode and identify parameters related to the relay operation through the relay operation element. For example, the relay operation element may include a relay operation parameter field. In addition, the relay operation parameter field may include a bandwidth for the relay operation, the number of spatial streams to be applied to the relay operation, a modulation and coding scheme (MCS), and the number of STAs participating in the relay operation.

Additionally, the relay operation parameter field may include a subfield indicating UL-based relay operation (i.e., an operation in which a relay STA transmits data received from non-AP STA(s) to an AP) or DL-based relay operation (i.e., an operation in which a relay STA transmits data received from an AP to non-AP STA(s)).

Additionally, the first STA may exchange capability information related to the AP and relay. For example, the first STA may transmit a capability element to the AP, the capability element including a first field indicating that the first STA can operate as a relay STA and a second field indicating that the first STA may perform relay operation.

Before or/and after step S1310, the first STA may receive a beacon frame from the AP. That is, the first STA may receive a beacon frame from the AP to indicate that a relay operation is performed within a basic service set (BSS) (including the first STA).

The first STA may receive a TWT element including a broadcast target wake type (target wake time, TWT) parameter set field from the AP (S1320).

And, the first STA may perform a relay operation within a specific service period (SP) based on the relay operation element and the TWT element (S1330).

Specifically, the TWT element may include a control field, and the control field may include a negotiation type subfield. The MSB (i.e., broadcast field) of the negotiation type subfield included in the control field may be set to 1, thereby indicating a broadcast TWT.

Additionally or alternatively, the TWT element may include a broadcast TWT parameter set, and the broadcast TWT parameter set may include a broadcast TWT parameter recommendation field indicating that a specific SP (i.e., a relaying TWT SP) set/assigned by the TWT element is for relay operation. In this case, the broadcast TWT parameter recommendation field value may be set to one of 5 to 7.

Additionally or alternatively, the control field may include a relay subfield indicating that a specific SP is for relay operation, wherein the relay subfield may be set in the eighth bit (B7) of the control field. For example, the relay subfield value may be set to 1, thereby indicating that the specific SP is for relay operation.

As an example of the present disclosure, a membership including a first STA and at least one second STA participating in a relay operation may be established based on a negotiation type subfield value being set to 3. That is, a first STA and at least one second STA established as membership within a specific SP may perform a relay operation with an AP.

As an example of the present disclosure, a first STA may receive data from an AP within a specific SP and transmit the received data to at least one second STA. Additionally, the first STA may transmit a message to the AP indicating that it has completed data transmission to at least one second STA within the specific SP.

As another example of the present disclosure, a first STA may receive data from at least one second STA within a specific SP and transmit the received data to an AP.

The method performed by the first STA described in the example of FIG. 13 may be performed by the first device (100) of FIG. 1. For example, one or more processors (102) of the first device (100) of FIG. 1 may receive a first frame including a relay operation element from an AP through one or more transceivers (106). The one or more processors (102) may receive a TWT element including a broadcast TWT parameter set field from the AP through one or more transceivers (106). The one or more processors (102) may perform a relay operation within a specific SP based on the relay operation element and the TWT element.

The above memory (104) can store instructions for performing the method described in the example of FIG. 10 when executed by one or more processors (102).

FIG. 14 is a flowchart illustrating a method performed by an AP according to one embodiment of the present disclosure.

The AP may transmit a first frame including a relay operation element to the first STA (S1410).

As an example of the present disclosure, the AP may transmit a relay operation element including parameters for performing a relay operation to the first STA. Additionally or alternatively, the AP may transmit a beacon frame indicating that it will perform a relay operation to the first STA and at least one second STA.

The AP may transmit a TWT element including a broadcast TWT parameter set field to the first STA (S1420).

And, the AP may perform relay operation within a specific SP based on the relay operation element and the TWT element (S1430).

That is, the AP may generate a TWT element for setting an SP for relay operation and transmit the generated TWT element to the first STA. Then, the AP may perform the relay operation using the parameters set in the relay operation element within the specific SP set by the TWT element. The configuration and related operations of the TWT element have been described with reference to FIG. 13, so redundant descriptions will be omitted.

The method performed by the AP described in the example of FIG. 14 may be performed by the second device (200) of FIG. 1. For example, one or more processors (202) of the second device (200) of FIG. 10 may transmit a first frame including a relay operation element to a first STA via one or more transceivers (206). The one or more processors (202) may transmit a TWT element including a broadcast TWT parameter set field to the first STA via one or more transceivers (206). The one or more processors (202) may perform a relay operation within a specific SP based on the relay operation element and the TWT element.

Furthermore, one or more memories (204) of the second device (200) may store commands for performing the method described in the example of FIG. 14 when executed by one or more processors (202).

Hereinafter, a method for setting and indicating SP related to relay operation is described in detail.

Regardless of the location of the STA within the BSS, in the next-generation wireless LAN system, signal transmission and reception using a relay transmission procedure can be supported/applied to transmit stable signals (i.e., reliable signals), increase coverage for signal transmission, and eliminate holes where signals cannot reach.

To reduce the complexity of implementing a relay transmission procedure, a relay transmission procedure controlled by an AP in a next-generation wireless LAN system is described. However, this is only one embodiment, and the description of the present disclosure described below can be applied not only to a relay transmission procedure controlled by an AP, but also to all relay transmission procedures.

In the present disclosure, a Relay STA controlled by an AP is referred to as an AP controlled Relay STA (hereinafter, ACRS).

ACRS may perform relay transmission for data received from an AP within a BSS. Here, control of ACRS for relay transmission procedure may be performed by the AP.

That is, ACRS may transmit a signal received from the AP to an end-user/STA based on control information received from the AP, or transmit a signal received from multiple non-AP STAs to the AP.

ACRS may mean an independent relay device that performs only relay transmission procedures and/or a non-AP STA that supports relay transmission procedures.

In order to indicate that a relay operation for transmitting and receiving signals through a relay STA is in progress within a BSS, an AP may indicate to the STA(s) within the BSS whether or not the relay operation is in progress through a beacon frame.

Accordingly, the AP may transmit a beacon frame to the STA(s) including information related to relay operation and/or relay operation support information (e.g., information on whether relay operation is supported, etc.). In addition, the information related to relay operation and/or relay operation support information may be set/defined on order 92 or reserved bits of the beacon frame body.

If the AP supports relay operation, the (re)association request/response frame format, probe request/response frame format, and/or (re)authentication frame format exchanged between the AP and non-AP STA may include a relay operation element.

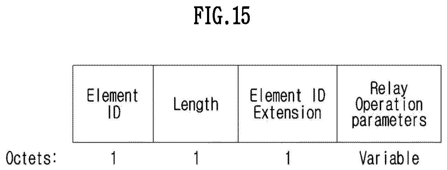

As an example of the present disclosure, as illustrated in FIG. 15, a relay operation element may include an element ID field, a length field, an element ID extension field, and a relay operation parameter field.

The relay operation parameters included in the relay operation element may include a BW subfield for relay transmission, a subfield indicating whether the relay transmission is DL or UL-based transmission, a subfield indicating the maximum number of spatial streams (NSS), a subfield indicating a modulation and coding scheme (MCS), a subfield indicating the number of STAs participating in the relay operation, and a subfield indicating whether beamforming is performed.

Additionally, the AP and non-AP STA can confirm/negotiate support for relay operation through signal exchange including capability or/and extended capability. In this case, relay operation support information can be indicated through the extended capability element.

For example, the capability element may include a relay subfield and a relay support subfield. The relay subfield may indicate whether the corresponding STA can operate as a relay STA. The relay support subfield may indicate whether signal transmission and reception are supported through the relay STA (i.e., through relay operation).

Each of the relay subfield and the relay support subfield may consist of 1 bit. That is, the relay STA may set the relay subfield value to 1 to indicate that it is a relay STA. In addition, the relay STA may set the relay support subfield value to 1 to indicate that it participates in a relay participation operation to transmit and receive signals. On the other hand, a non-AP STA that transmits and receives signals through a relay operation does not operate as a relay STA, and thus the relay subfield value may be set to 0. In addition, the non-AP STA may set the relay support subfield value to 1 to indicate that it participates in a relay participation operation to transmit and receive signals.

Only relay STAs with the relay support subfield value set to 1 in the capability element and relay STAs/non-AP STAs with the relay support subfield value set to 1 can perform relay operations within the BSS.

A capability element including a relay subfield and a relay support subfield may be an element defined within a HE/EHT/UHR/next-generation wireless LAN system. The relay subfield and the relay support subfield may be configured depending on whether a non-AP STA performing a relay operation is associated with a HE/EHT/UHR/next-generation wireless LAN system.

### Embodiment 1

Embodiment 1 relates to a method for setting and indicating an SP for relay operation. As described above, in order for a relay STA and a non-AP STA to perform relay operation within a BSS, an AP may set an SP for relay operation and indicate the same to the relay STA and the non-AP STA. The SP set by the AP for relay operation may be indicated to the relay STA and the non-AP STA through a method described below (e.g., Embodiment 1-1 and/or Embodiment 1-2).

The AP may generate/configure a TWT element to configure an SP for relay transmission/reception operations. A broadcast TWT may be used to indicate an SP to a relay STA and a non-AP STA performing relay transmission/reception operations (i.e., a relaying SP indication).

### Embodiment 1-1

To indicate that a TWT element for relaying SP instruction is for setting up a broadcast TWT, the broadcast field included in the control field of the TWT element (i.e., the MSB (most significant bit) of the negotiation type subfield included in the control field) may be set to 1. Here, the negotiation type subfield value may be set to 2 or 3.

When grouping or membership is established for relay STAs and non-AP STA(s) performing relay transmission and reception operations and relay transmission and reception operations are performed accordingly, the negotiation type subfield value may be set to 3.

As described above, a reserved bit (e.g., the 8th bit (B7)) of the control field of the TWT element may be used to indicate that the TWT set as the broadcast TWT is a TWT for relay transmission and reception operations.

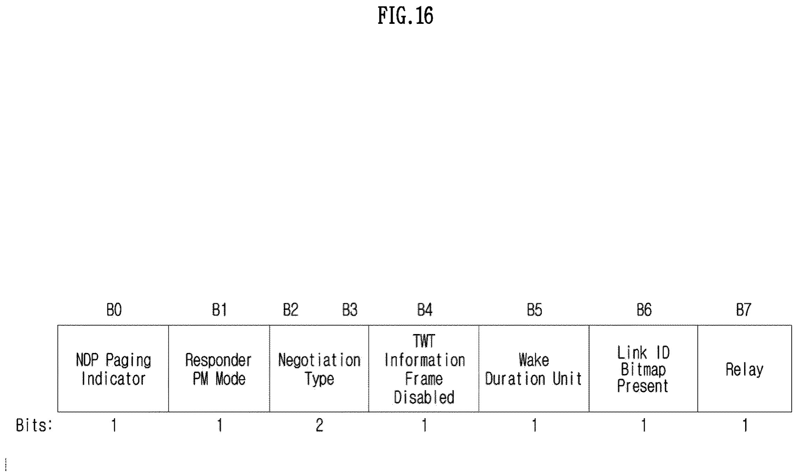

For example, as illustrated in FIG. 16, a subfield (e.g., a relay subfield) may be set on B7 of the control field of the TWT element to indicate that the TWT set by the corresponding TWT element is for relay operation or/and relay transmission and reception. For example, the relay subfield value may be set to 1 to indicate that the TWT set by the TWT element is for SP allocation for relay transmission and reception. Here, the name relay subfield may be changed to another name.

### Embodiment 1-2

For SP (allocation) instructions for relay transmission and reception, the broadcast TWT recommendation field included in the request type field of the broadcast TWT parameter set field may be used.

As an example of the present disclosure, for SP instructions for relay transmission and reception, the broadcast field value of the negotiation type subfield may be set to 1. Accordingly, a broadcast TWT may be set by the TWT element.

In addition, the broadcast TWT recommendation subfield of the request type field included in the broadcast TWT parameter set field may indicate that the SP for relay transmission and reception is indicated/set by the TWT element. To indicate that the SP for relay transmission and reception is indicated/set by the TWT element, one of the broadcast TWT request field values (e.g., one of the reserved values in the broadcast TWT request field (e.g., one of 5 to 7)) may be used.

For example, if the broadcast TWT recommendation field value is set to 5, this may indicate that the broadcast TWT SP is an SP for relay transmission and reception. In addition, the broadcast TWT recommendation field set to 5 may indicate that the relay STA and non-AP STA participating in relay transmission and reception operations in the corresponding broadcast TWT SP have priority.

For example, a broadcast TWT recommendation field that can indicate an SP for relay transmission and reception can be configured as shown in Table 1. However, this is only an example, and the broadcast recommendation field value indicating an SP for relay transmission and reception can also be set to 6 or 7, etc.

**[Table 1]**

| Broadcast TWT Recommended Field Values | Bandwidth (MHz) for HE TB PPDU |
|---|---|
| 5 | The corresponding broadcast TWT service period (SP) can be expressed as a relaying TWT service period. A broadcast TWT parameter set with the broadcast TWT recommendation field set to 5 can be expressed as a relaying TWT parameter set. |
| 6-7 | Reserved |

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application. It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, but may be applied to various WLAN or wireless communication systems other than the IEEE 802.11-based system.

## Claims

1. A method performed by a first station (STA) in a wireless LAN system, the method comprising:
receiving a first frame including a relay operation element from an access point (AP);
receiving a broadcast target wake type (TWT) element including a TWT parameter set field from the AP; and
performing a relay operation within a specific service period (SP) based on the relay operation element and the TWT element,
wherein the broadcast TWT parameter set includes a broadcast TWT parameter recommendation field indicating that the specific SP is for the relay operation.

2. The method of claim 1, wherein:
the broadcast TWT parameter recommendation field value is set to one of 5 to 7.

3. The method of claim 1, wherein:
a most significant bit (MSB) of a negotiation type subfield included in a control field of the TWT element is set to 1.

4. The method of claim 3, wherein:
the control field includes a relay subfield indicating that the specific SP is for relay operation, and
the relay subfield is set in a 8th bit (B7) of the control field.

5. The method of claim 3, wherein:
based on the negotiation type subfield value being set to 3, a membership is established including the first STA and at least one second STA participating in the relay operation.

6. The method of claim 1, wherein:
the relay operation element includes a relay operation parameter field, and
the relay operation parameter field includes a bandwidth for the relay operation, a number of spatial streams to be applied to the relay operation, a modulation and coding scheme, and a number of STAs participating in the relay operation.

7. The method of claim 1, wherein:
a capability element including a first field indicating that the first STA can operate as a relay STA and a second field indicating that the first STA can perform a relay operation is transmitted to the AP.

8. The method of claim 1, wherein:
a beacon frame is received from the AP to indicate that the relay operation is performed within a basic service set (BSS) including the first STA.

9. A first station (STA) operating in a wireless LAN system, the first STA comprising:
at least one transceiver; and
at least one processor connected to the at least one transceiver,
wherein the at least one processor is configured to:
receive, through the at least one transceiver, a first frame including a relay operation element from an access point (AP);
receive, through the at least one transceiver, a broadcast target wake type (TWT) element including a TWT parameter set field from the AP; and
perform a relay operation within a specific service period (SP) based on the relay operation element and the TWT element,
wherein the broadcast TWT parameter set includes a broadcast TWT parameter recommendation field indicating that the specific SP is for the relay operation.

10. A method performed by an access point (AP) in a wireless LAN system, the method comprising:
transmitting a first frame including a relay operation element to a first station (STA);
transmitting a broadcast target wake type (TWT) element including a TWT parameter set field to the first STA; and
performing a relay operation within a specific service period (SP) based on the relay operation element and the TWT element,
wherein the broadcast TWT parameter set includes a broadcast TWT parameter recommendation field indicating that the specific SP is for the relay operation.

11. An access point (AP) performed in a wireless LAN system, the AP comprising:
at least one transceiver; and
at least one processor connected to the at least one transceiver,
wherein the at least one processor is configured to:
transmit, through the at least one transceiver, a first frame including a relay operation element to a first station (STA);
transmit, through the at least one transceiver, a broadcast target wake type (TWT) element including a TWT parameter set field to the first STA; and
perform a relay operation within a specific service period (SP) based on the relay operation element and the TWT element,
wherein the broadcast TWT parameter set includes a broadcast TWT parameter recommendation field indicating that the specific SP is for the relay operation.

12. A processing device configured to control a first station (STA) in a wireless LAN system, the processing device comprising:
at least one processor; and
at least one computer memory operatively coupled to the at least one processor and storing instructions for performing operations upon being executed by the at least one processor;
the operations include:
receiving a first frame including a relay operation element from an access point (AP);
receiving a broadcast target wake type (TWT) element including a TWT parameter set field from the AP; and
performing a relay operation within a specific service period (SP) based on the relay operation element and the TWT element,
wherein the broadcast TWT parameter set includes a broadcast TWT parameter recommendation field indicating that the specific SP is for the relay operation.

13. At least one non-transitory computer readable medium storing at least one instruction,
based on the at least one instruction being executed by at least one processor, an apparatus for performing communication in a wireless LAN system controls to:
receive a first frame including a relay operation element from an access point (AP);
receive a broadcast target wake type (TWT) element including a TWT parameter set field from the AP; and
perform a relay operation within a specific service period (SP) based on the relay operation element and the TWT element,
wherein the broadcast TWT parameter set includes a broadcast TWT parameter recommendation field indicating that the specific SP is for the relay operation.
